(19) Europäisches Patentamt
European Patent Office
Office européen des brevets

(11) **EP 2 138 973 A1**

(12) **EUROPEAN PATENT APPLICATION**

(43) Date of publication:
**30.12.2009 Bulletin 2009/53**

(51) Int Cl.:
***G06Q 40/00*** *(2006.01)*

(21) Application number: **09250873.8**

(22) Date of filing: **27.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (72) Inventors:<br>• **Reece, Michael**<br>  **South Orange, New Jersey 07079 (US)**<br>• **Wicks, Antony James**<br>  **London, SE26 4NT (GB)** |
| (30) Priority: **28.03.2008 US 79717**<br>**28.03.2008 US 79632**<br>**28.03.2008 US 79665** | (74) Representative: **Small, Gary James et al**<br>**Carpmaels & Ransford**<br>**43-45 Bloomsbury Square**<br>**London WC1A 2RA (GB)** |
| (71) Applicant: **Fortent Americas, Inc.**<br>**New York, NY 10016 (US)** | |

(54) **Assessment of risk associated with doing business with a party**

(57)    There is provided a method and a system for determining a level of risk associated with doing business with a party. The method includes (a) determining a first risk score that characterizes the party, based on a presented characteristic of the party, (b) determining a second risk score that characterizes the party, based on an activity that involves the party; and (c) determining a resultant risk score that characterizes the party, based on the first and second risk scores. There is also provided a system that performs the method, and a storage medium having a program encoded thereon that is executable in a processor to perform the method.

Fig 1: Customer Risk Monitor

**Description**

BACKGROUND OF THE INVENTION

1. Field of the Invention

The present disclosure relates to a method and system for determining a level of risk associated with doing business with a party.

2. Description of the Related Art

In a case of a business relationship or a possible business relationship, a party, e.g., a bank, may wish to evaluate a risk of doing business with another party, e.g., a customer. One technique for performing such an evaluation is referred to as know-your-customer (KYC) risk assessment. The KYC risk assessment is typically performed when the business relationship is being first established, for example, when the customer is opening an account at the bank. Another technique evaluating the risk of doing business with the customer considers the behavior of the customer and involves monitoring transactions involving the customer. The KYC risk assessment and the transactional monitoring are typically performed independently of one another.

There is a need for a technique that evaluates business risk that uses KYC risk assessment and transactional monitoring synergistically.

SUMMARY OF THE INVENTION

There is provided a method for determining a level of risk associated with doing business with a party as claimed hereinafter. The method includes (a) determining a first risk score that characterizes the party, based on a presented characteristic of the party, (b) determining a second risk score that characterizes the party, based on an activity that involves the party; and (c) determining a resultant risk score that characterizes the party, based on the first and second risk scores.

Preferably, the presented characteristic is selected from the group consisting of a name of said party, an address of said party, an occupation of said party, a geographic location of said party, and a combination thereof. Preferably, the activity is selected from the group consisting of payment activity of said party, an account inquiry made by said party, an address change of said party, and a combination thereof. Preferably, the second risk score is indicative of a likelihood of a behavior selected from the group consisting of a financial misdeed, a financial crime, money laundering, and a combination thereof.

In an additional embodiment, the method consists of (a) determining a first risk score that characterizes a party, based on an activity that involves said party, and (b) determining a second risk score that characterizes said party, based on a presented characteristic of said party, if said first risk score exceeds a threshold. In a further additional embodiment, the method consists of (a) determining a first risk score that characterizes a first party, based on a presented characteristic of said first party, (b) associating said first party with a second party, based on said first risk score, (c) determining a second risk score that characterizes said first party, based on an activity that involves said second party, and (d) determining a resultant risk score that characterizes said first party, based on said first and second risk scores.

There is also provided a storage medium having a program encoded thereon that is executable in a processor to perform the method(s).

There is also provided a system that performs the method as claimed hereinafter. The system includes (a) a module that determines a first risk score that characterizes a party, based on a presented characteristic of said party, (b) a module that determines a second risk score that characterizes said party, based on an activity that involves said party, and (c) a module that determines a resultant risk score that characterizes said party, based on said first and second risk scores.

Preferably, the presented characteristic is selected from the group consisting of a name of said party, an address of said party, an occupation of said party, a geographic location of said party, and a combination thereof. Preferably the activity is selected from the group consisting of payment activity of said party, an account inquiry made by said party, an address change of said party, and a combination thereof. Preferably the second risk score is indicative of a likelihood of a behavior selected from the group consisting of a financial misdeed, a financial crime, money laundering, and a combination thereof.

In an additional embodiment, the system includes (a) a module that determines a first risk score that characterizes a party, based on an activity that involves said party, and (b) a module that determines a second risk score that characterizes said party, based on a presented characteristic of said party, if said first risk score exceeds a threshold. In a further additional embodiment the system includes (a) a module that determines a first risk score that characterizes a first party, based on a presented characteristic of said first party, (b) a module that associates said first party with a second party, based on said first risk score, (c) a module that determines a second risk score that characterizes said first party, based on an activity that involves said second party, and (d) a module that determines a resultant risk score that characterizes said first party, based on said first and second risk scores.

The techniques described herein are exemplary, and should not be construed as implying any particular limitation on the present invention. It should be understood that various alternatives, combinations and modifications could be devised by those skilled in the art. The present invention is intended to embrace all such alternatives, modifications and variances that fall within the scope of the appended claims.

BRIEF DESCRIPTION OF THE DRAWINGS

FIG. 1 is a block diagram of a customer risk monitor.

FIG. 2 is a block diagram of an alert generation process.

FIG. 3 is a diagram showing several parties and their attributes.

FIGS. 4A - 4D are, collectively, a flowchart of a method for determining a risk score.

FIGS. 5A and 5B are, collectively, a flowchart of a method for determining a risk score.

FIG. 6 is a flowchart of a method for determining a risk score.

FIG. 7 is a block diagram of a system for executing the methods described herein.

DESCRIPTION OF THE INVENTION

Before proceeding with a description of the present invention, it is well to define certain terms as used herein.

A risk score is a numeric value that represents a level of risk associated with a party such as a customer, account, company or other business entity. Risk scores may be converted to risk bands (e.g. high, medium, low) based on score ranges. A risk score can consider presented characteristics of a party, be derived from an assessment of transactional activity involving a party, or both.

A presented characteristic is a trait pertaining to recognition of a party, that tends to distinguish the party from others in a population. Examples of presented characteristics include:

first name (for an individual);
middle name (for an individual);
last name (for an individual);
name (for an organization);
date of birth (for an individual);
nationality (for an individual or country of registration for an organization);
an occupation;
a line of business;
product/service;
type of customer;
ID number (e.g., social security number (SSN) of an individual, or employer identification number (EIN) of an organization);

residence / address details: street address, city, county/province/state, postcode/zip, country; and geographic location, e.g., South America.

Many other types of characteristics can also be considered. Thus, the party can be distinguished as being a particular individual in the population, e.g., based on the party's name and SSN, or as a member of a class within the population, e.g., the party is a member of a class having an occupation of "Attorney."

A risk score based on a presented characteristic is a risk score created by an algorithmic comparison of one or more presented characteristics to a trusted information source.

An activity is an electronic record of a financial occurrence in the form of monetary (payments) or nonmonetary (account inquiries, address changes, card issuance and other similar events) transactions that involves a party. The activity may be initiated by the party (e.g. a customer makes a credit card payment to a retailer), or by individuals or institutions interacting with the party (e.g., a payment is made from another individual to the account of the party, or an institution issues a new credit card to the party, where this issuance is recorded as a non-monetary transaction).

A risk score based on an activity is a risk created through an assessment of transactional activity involving a party, e.g. a customer, account, organization or other business entity, based on a comparison of a pattern of one or more transactions (the activity) to previous transactional patterns (previous activity or profiles) or to known patterns of activity (e.g. where activity is compared to predetermined norms or through the application of business rules).

A profile is a mathematical or statistical characterization of the activity of a particular party associated with the transactional activity of that party during a defined period of time. Profiles may be calculated values that provide an indication of the typical or average behavior of a party calculated across a period of time. Profiles may also be parametric or non-parametric characterizations of the party's behavior. Profiles may consider, and be built against, particular features of the transactions associated with the party, such as transaction types present, transaction sources used, locations where the transactions were made or other parties, such as merchants, involved in the transactions. Profiles may also be made up of combinations of such features.

A peer profile is a profile created to characterize the behavior of defined groups of one or more individuals and are used to characterize the typical behavior associated with members of that group. A peer profile is otherwise similar to a profile built for a single party and will be built against features of a transaction for all transactions across a defined period of time. A peer profile may be built directly or through the re-aggregation of single party profiles.

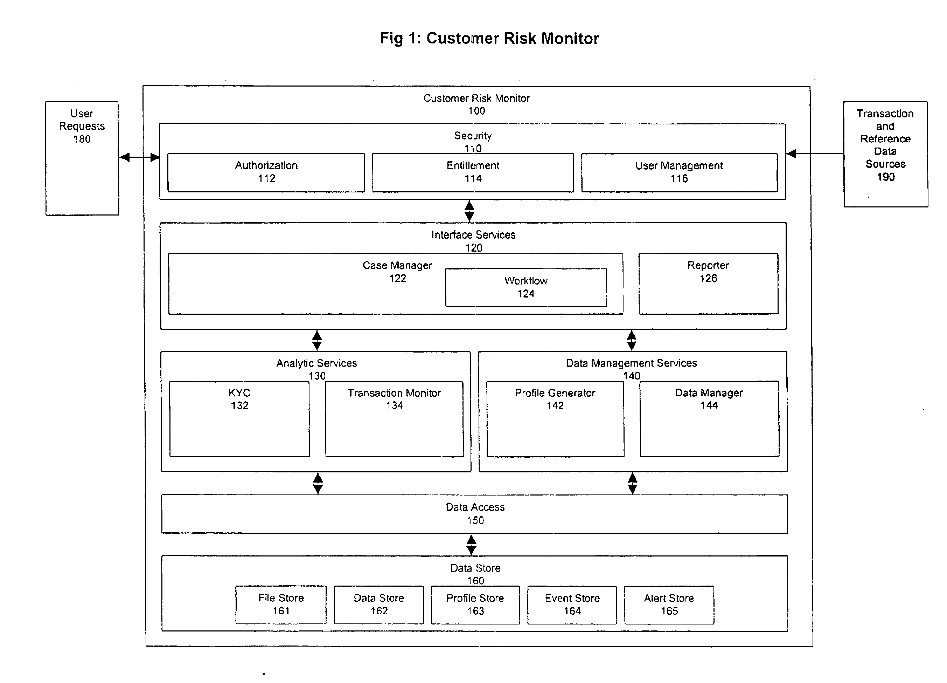

FIG. 1 is a block diagram of a customer risk monitor 100. Customer risk monitor 100 monitors transactions for a customer or account, and generates alerts based on a risk model associated with transaction patterns, previous historic transactions, presented characteristics and customer risk. Customer risk monitor 100 performs a risk assessment for new or existing customers based on presented characteristics, and this information is used for further purposes associated with customer account activity monitoring. Customer risk monitor 100 also provides case management and reporting functionality to allow efficient investigation of alerts and cases generated by the system. Customer risk monitor 100 includes a security component 110, an interface services component 120, an analytic services component 130, a data management services component 140, a data access component 150, and a data store 160.

Security component 110 is in communication with user requests 180 and transaction and reference data sources 190. Security component 110 is also in communication with interface services component 120. Security component 110 provides functions for authorization 112, entitlement 114, and user management 116.

Interface services component 120 is in communication with security component 110, analytic services component 130, and data management services component 140. Interface services component 120 provide a case manager 122 and a reporter 126. Case manager 122 in turn includes a workflow component 124.

Analytic services component 130 is in communication with interface services component 120 and data access component 150. Analytic services component 130 includes a know-your-customer (KYC) component 132 and a transaction monitor 134.

Data management services component 140 is in communication with interface services component 120 and data access component 150. Data management services component 140 includes a profile generator 142 and a data manager 144.

Data access component 150 is in communication with analytic services component 130, data management services component 140 and data store 160.

Data store 160 is in communication with data access component 150. Data store 160 includes a file store 161, a data store 162, a profile store 163, an event store 164, and an alert store 165.

KYC Component 132

KYC component 132 provides functionality for automatic or operator controlled Customer Identity Verification (IDV), Customer Due Diligence (CDD) and Enhanced Due Diligence (EDD) checks for a new or existing customer. The result of these checks is a set of reports, one or more risk scores, or a combination of both of these, associated with the business entity being checked. The KYC checks can be applied to assess the risk of any business entity (e.g., customer, account, company or institution) but is most frequently applied to the assessment of risk of customers and customer accounts. KYC component 132 performs checks against a selected set of presented characteristics for an account and provides a risk score for that account, where the checks consider features associated with the customer (or customers where there are multiple account holders) associated with the account (e.g., customer name, address, occupation, geography, etc.) or features of the account itself such as product type or customer type (e.g., retail or corporate account, or customer subdivisions applied to such accounts). The risk scores and the reports generated at the time of a KYC check are retained by customer risk monitor 100 for future use.

As noted above, the KYC check comprises 3 stages: IDV (Customer Identity Verification), CDD (Customer Due Diligence) and EDD (Enhanced Due Diligence). KYC checks can be performed in 2 modes of operation: to perform assessment of a customer or account interactively, based on presented characteristics; or automatically on a batch basis where the presented characteristics of one or more customers or accounts are checked and a risk score, report or both risk score and report is produced for each without the immediate need for user interaction. In each of these operational modes any combination of one or all of the KYC processes (IDV, CDD, EDD) can be performed, dependent on customer risk monitor 100 configuration and the business need. The KYC checks are performed in batch mode whenever new customer or account details are provided, or where updates to the presented characteristics associated with customers or accounts are fed to customer risk monitor 100.

In interactive mode KYC component 132 provides workflow functionality to guide an operator through the KYC process steps. The workflow process guides the operator through the process steps, allows them to save, stop and re-start a particular check and to skip process stages when these are not required or have not been configured. The workflow process prompts the user to perform specific actions and to acknowledge that certain processes have been correctly completed before a transition is allowed to the next process step. Transitions and actions associated with the process steps are audited, with details of the operator involved, are stored and used for reporting purposes.

The generated risk scores are banded (e.g., high, medium, low) or are a value, for instance normalized between 0.0 and 1.0, where the greater the value the higher the degree of risk considered by the system.

To best identify business entities KYC component 132 uses data normalization and transformation methods to process features of the presented characteristics being used as part of processing. These normalization and transformation methods are designed to deal with orthographic (cognitive misspellings, oral transmission, spelling variants) typographic (keyboard entry errors, or seriality differences) and syntactic (formatting, variant usage) noise that may be present. Such normalization and transformation methods allow synonym replacement, and other name, address and zipcode methods may be used to test alternate combinations of the presented characteristics (e.g., a customer called 'Dick Smith' would be checked against both 'Dick Smith', 'Richard Smith' and 'Richard Smythe', a zipcode is transformed into an address or vice-versa prior to testing).

The KYC check considers customer name and address details as well as other features and attributes of the customer or the account of the customer. The KYC check also considers the type of account being checked (Product Type), the type of customer being checked (customer Type, e.g., business, retail, etc.) and geography information. Configuration, intermediate results and final results of processes of KYC component 132 are retained in data store 160.

IDV Check

An IDV check is usually performed first and is done to verify the identity of the customer. The check may also be repeated where it is necessary to re-affirm the identity of a customer or other business entity. The check is performed to make sure that the customer is who they say they are.

IDV checks consider identity information provided by a customer (e.g., SSN, passport number, or details from utility bills, mortgage, and credit card statements) as well as personal details of the customer (e.g., name, address, date of birth, SSN, etc.). This data may be transformed and normalized as previously described to allow the check to be performed more robustly. The source and type of the information is recorded for later reference and may appear on reports generated by the system.

Using a defined combination of data from the presented characteristics, a check is performed between the data and that contained in one or more trusted reference sources. The check is performed to understand whether the customer details match those in the trusted reference source(s) and therefore that the customer requesting a product or service is legitimate. The reference sources used as part of the IDV check may include historical records held by a banking institution relating to details of its own or previous clients, external data sources held by credit reference or similar agencies or any other similar trusted reference source. The checks of external data sources may be performed as call outs from the main KYC processing.

The result of the IDV check is a score that identifies the likelihood that the customer or business entity being tested is who they say they are. The score may be produced mathematically through the application of formulae or algorithmically through the use of rules. The identity score is then converted to a risk score. Where a customer is high risk if their identity cannot be verified, score close to 1.0, and low risk if their identity is verifiable, score close to 0.0.

CDD Check

A CDD check is usually performed following an IDV check. The CDD check is performed by comparing details of a customer (e.g., name, address, date of birth, SSN, etc.) against a database of known individuals. The database of known individuals (or business entities) comprises details of 'good' and 'bad' individuals. Details of good individuals may be held as a 'cold' list. Details of bad individuals will be held in a 'hot' list.

A 'hot' list is a list of individuals with which the organization does not wish to do business, or individuals that the organization has an obligation to identify, such as a known terrorist, criminal or PEP (Politically Exposed Person). Such a list may be created from an organization's own data, e.g., based on passed experience of bad clients, or be built from lists published by governmental or regulatory bodies, e.g., Office of Foreign Assets Control (OFAC), or other sanctions lists. Sanctions lists are provided by governmental institutions such as the OFAC, Bank of England and the Federal Bureau of Investigation.

A 'cold' list is a list of individuals for which the organization considers that it is not necessary to perform any screening, e.g., known good customers or governmental accounts.

The CDD check checks for identity matches between the customer record and the records associated with the hot and cold lists. Data normalization and transformation methods as previously described are performed to improve the robustness of the matching process.

If the customer is on a cold list the risk score of the CDD unit will be low. If the customer is on a hot list then the risk score will be high. If there is an exact match to a person on a hot list, the likely outcome would be that the account would be refused, or in batch mode an alert would be generated. The CDD check builds a risk score based on a measure of the match between an individual that appears on the hot and cold lists. When there is a match between an individual and one that appears on a hot list, the risk score may be dependent on the authority of the list source of the degree of certainty of identification of the individual on the list.

The CDD check also builds a risk score by looking at the associations and linkages of individuals across data. For instance a customer that has a business or family relationship with an individual on a hotlist will have an increased risk score because of the association.

The CDD check component may use 3$^{rd}$ party data sources in order to identify further linkages between data within a watchlist and so improve the performance of the system.

The result of the CDD check is a score that identifies the risk of an individual based on the following measures:

(a) whether the individual appears on a hot list, i.e., high risk;

(b) whether the individual appears on a cold list, i.e., low risk;

(c) whether the individual is an associate of someone or linked by other factors (e.g., address, employment, bank accounts or other relationships) to an individual on a hotlist, i.e., increased risk; and

(d) whether the individual is an associate of someone or linked by other factors (e.g., address, employment, bank accounts or other relationships) to an individual on a cold list, i.e., decreased risk.

The score may be produced mathematically through the application of formulae or algorithmically through the use of rules.

EDD Check

An EDD check associated with the KYC process is performed using searches of unstructured (textual) data sources to identify those that contain details of the customer against which an EDD check is being performed. The EDD search considers the customer name, customer address, customer details and combinations of these. Data normalization and transformation methods as previously described are performed to improve the robustness of the matching process. Documents found by the EDD process may be qualified as either positive or negative references associated with an individual.

The documents searched may comprise a combination of one or more of the following:

(a) web pages or a sub-selection of web pages associated with particular web sites that hold specific data on indivduals (e.g., Securities and Exchange Commission (SEC), Bank Of England, and Financial Crimes Enforcement Network (FinCEN), which is a bureau of the United States Department of the Treasury);

(b) document repositories or records held by an organization;

(c) results of previous CDD and EDD checks;

(d) results associated with the investigation of fraud, money laundering or other business investigations; and

(e) details retained in case manager 122.

A positive reference supports the legitimacy of a customer and lead to a reduction in risk score. A negative reference identifies that a customer should be considered with a degree of risk and therefore the resultant risk score would be increased.

Documents may be qualified by degrees, e.g., a score of between -1.0 and +1.0 where a low score indicates reduced risk, or may be considered in ranges, e.g., strongly positive, positive, neutral, negative, strongly negative. A negative reference will have a positive risk score (e.g. 1.0) and a positive reference a negative risk score (e.g. -1.0). The positive or negative reference indicator may be returned by association as part of the search where documents have previously been classified as negative or positive indicators.

Alternatively where documents have not previously been classified the positive or negative reference indicator may be automatically generated by the system on the basis of the document source or the document content. For instance, if a document is taken from an internal repository of criminal investigations then a negative indicator could be derived.

Alternatively, a positive or negative indicator may be created for a document based on the presence of particular key word indicators. Other more complex schemes considering phrasing and phrase ordering, algorithmic methods or statistical pattern recognition can be applied. Where key words are used to identify documents as positive or negative, then these can be applied as part of the initial search.

In interactive mode a user may review documents and select or remove documents that they deem to be relevant. They may also correct, incorrectly attributed, document reference indicators. With these changes stored for later reference.

The result of the EDD check is a risk score, a report providing details of a set of documents identified to be relevant to the customer or both of these. The report contains details of cited documents (document summaries) and how they are associated with the customer being checked. The score is produced by considering the identified documents and the level of risk associated with them. The score may be produced mathematically through the application of formulae or algorithmically through the use of rules.

KYC Risk Score

The KYC risk score is produced based on an algorithmic combination of the results of the KYC stages, where the IDV, CDD and EDD checks each create a risk score. One or more of these stages may be performed, and therefore the overall KYC risk score may be a combination of one or more of these stages.

It is possible that the IDV, CDD and EDD checks may each generate multiple risk scores (e.g., where a risk is assessed based on customer name, geography or account type). In this case these multiple risk scores may be combined to create a single overall risk score.

Both the individual stage scores and the overall risk score are stored for future reference.

The score may be produced mathematically through the application of formulae or algorithmically through the use of rules. The scoring approach is configurable. Risk scores and reports generated by the KYC component 132 are retained in data store 160.

KYC Report

Each stage of the KYC sub processes may contribute elements to the creation of a single report. This report is stored as a record of the processing activity and for future reference. The report is archived when the KYC check is completed and made available to other system components, e.g., case manager 122, for further reference. The report may be used as part of future KYC checks, future searches, or as part of case management and investigations.

Transaction Monitor 134

Transaction monitor 134 monitors activity for business entities. Monitoring is performed on customers (retail and corporate) and accounts. Transactions considered by the system are monetary (payments) and non-monetary (account inquiries, address changes, etc.) that may have been initiated by the account holder or may have been initiated by a third party but involving the account holder.

Monitoring is performed to highlight financial irregularities or patterns of behavior indicative of financial crime or money laundering. Monitoring can also be performed to highlight other patterns of behavior that are in other ways of interest to a business.

Each interaction with a banking institution gives rise to monetary transaction records, where a customer or other party makes or receives a payment associated with an account held by the customer, or to non-monetary transaction records (such as balance enquiries, statement requests or card issue events). These interactions and payments give rise to transactions that are passed to transaction monitor 134 for monitoring.

Monitoring may consider behavior based on a single transaction or across aggregates of multiple transactions. Monitoring may consider behavior across multiple transactions for a single customer or transactions between customers. The monitoring may be performed in batch mode, rapid batch mode or in real time.

Transaction monitor 134 monitors the behavior of the customer and the customer's accounts based on transaction and reference data received as transactions are delivered to it. Transaction monitor 134 may operate:

    (a) on data sent or taken from feed systems;
    (b) on data taken from data store 160; and
    (c) on data taken from other data stores.

Transaction monitor 134 may use other additional data to support decision processes. This data may be taken from data store 160 or other data storage systems, and may comprise previous transaction information, profiles created from previous transaction data and reference data.

Transactions considered by transaction monitor 134 may be subject to transformation and normalization. The normalization features of KYC component 132 may be used to transform details of transactions (e.g., correspondent transactions, debit card merchant names, etc).

When transaction monitor 134 detects activity of interest, it generates an alert.

Alert Generation

Alert generation comprises two intermediate stages: event generation, infraction generation.

Alerts are generated based on an algorithmic or rule based combination of infractions. Alert generation is based on comparison against a threshold. If the score for an infraction or a combination of infractions is greater than this threshold then an alert is generated.

Alerts may be generated directly or directly from events or infractions without any additional processing stages. Alerts are generated against a customer, account or other business entity associated with the transactions being monitored.

Alert generation processes may restrict the number of alerts such that no more than a predetermined number are generated in a particular processing period. Such restrictions are used to control the number of alerts that investigators need to handle.

Alerts generated by transaction monitor 134 are passed to the case Manager 122 for further processing.

Event Generation

Events are generated by transaction monitor 134 whenever characteristics of the transaction being monitored are unusual, significant or are associated with a pattern of interest to the system. Events are generated based on the transaction activity of, and are associated with, a business entity.

Events are generated through:

    (a) application of a rule or other algorithm to a transaction for a business entity;
    (b) application of a rule or other algorithm to an aggregation across transactions for a business entity;
    (c) comparison of the transaction to a profile where the profile is associated with the business entity featured in the transaction;
    (d) comparison of the transaction to a peer profile where the peer profile is associated with peers of the business entity featured in the transaction;
    (e) comparison of aggregates across multiple transactions to a profile where the profile is associated with the business entity featured in the transactions;
    (f) comparison of aggregated across multiple transactions to a peer profile where the peer profile is associated with peers of the business entity featured in the transactions;
    (g) the results of other processes such as KYC or hotlisting; and
    (h) feeds from other external systems.

Events are subject to result shaping and normalization functions so that events are scored between 0 and 1.0.

Infraction Generation

Infractions are generated based on an algorithmic combination of events, where the algorithmic combination considers different weights for different event types, and where these events weights may be specifically applied to the events for a particular business entity based on characteristics of that business entity. The weights applied are configurable depending on the business entity being monitored and the business problem to be solved.

Infractions are associated with a business entity. Infractions are generated either:

(a) when a rule is breached (where the rule is applied against events, transactions and / or profiles); or
(b) when a threshold is breached based on the algorithmic combination of events; or
(c) as a result of other processes such as KYC or hotlisting; or
(d) as a result of feeds from other external systems.

The infraction generation considers events generated in a particular processing batch or across particular time periods. Through the assessment of infraction numbers and candidate alerts, the system limits the number of alerts generated in a particular time period.

The generation of an infraction may cause additional investigation or algorithmic processes to be triggered. For instance, to run an algorithm to mitigate why an alert should not be generated, or to run a specific rule or to perform a KYC check on the business entity associated with the infraction. The result of such processes will be infractions.

Transaction monitor 134 provides facilities to manage the event weights associated with the generation of infractions and alerts. Transaction monitor 134 provides a test facility to allow different combinations of event weights to be run against a sample of events in order to test the impact of changes to the events. The sample of events considered may be those over a specific period of time. Alerts generated through this test facility may be passed to case manager 122 for further processing. Performing the test in this way against previously calculated events allows such testing to be performed quickly and efficiently without the need to re-consider all transactions previously presented to the system. Once an operator is satisfied with changes to event weights tested in this way, these may be put live into the system. Changes to event weights and other parameters are audited. Testing and changes may only be performed by authorized users.

Rules

Infractions can be created through the application of rules applied to transactions delivered to the system. When the characteristics of the rule are breached then an infraction will be generated. Infractions may also be generated through application of rules against transactional, profile or reference data held in data store 160. The rules may also consider events generated by the system.

Rules may be run at the point that transactions are delivered into the system or at defined times. Rules may be scheduled to run at particular times or following particular events. For instance, a defined set of rules may be run at particular times against data, e.g., daily or weekly.

Transaction monitor 134 creates, tests, schedules and applies rules in the system. The test facility considers a sample of data and allows an operator, on the basis of this sample, to estimate the number of times a rule will fire when the rule is applied to the complete sample. This allows the operator to estimate the number of alerts that will be generated by a rule. Transaction monitor 134 can be configured to prevent a rule from operating until it has been tested by an operator. Once a rule has been tested it can be put live. Changes to rules are audited and may only be performed by authorized users.

Hotlisting

Hotlisting is the process of matching across one or more elements of transactional data records to elements in a hotlist. The hotlist comprises a base hotlist with name, address, country or other details as well as synonym lists. The hotlist may be subject to data normalization and transformation methods as described previously. For example, hotlisting may apply the same entity and name normalization processes as used by KYC component 132.

Transaction monitor 134 creates, tests, schedules and applies hotlisting in the system. Hotlisting is performed on reference data, transaction data and other data stored in data store 160.

Hotlisting can be configured to generate alerts, events or infractions when a record matches elements of a hotlist, or where the degree of match is beyond a given threshold. Hotlisting can also be configured to generate a report when a record matches elements of a hotlist, or where the degree of match is beyond a given threshold. Hotlisting allows retrospective testing of new or changes to watchlists against historically stored reference or transaction data, where this data is held in data store 160.

The test facility considers a sample of data and allows an operator, on the basis of this sample, to estimate the number of matches that may occur when elements of the hotlist are applied to the complete sample.

## Data Store 160

Data store 160 provides storage facilities for all other areas of the system. Data store 160 allows storage of structured and unstructured data, and is searchable. Data store 160 provides facilities for the management of data, and for the loading, transformation, storage, sorting, indexing and querying of data. Data retained comprises:

(a) reference data;
(b) transactional data;
(c) profile data; and
(d) configuration data.

Data store 160 provides facilities for the archiving and deletion of data no longer required for system operation. Data store 160 provides storage for watch lists, PEP lists, cold lists, etc., that are used in other system components. Data store 160 provides a common repository for watchlists and other defined risk lists (e.g. country risk lists).

## Profile Generator 142

Profile generator 142 builds profiles of activity for specific business entities. Profiles are statistical aggregations of features of transactions associated with a business entity, usually a customer or account, across a defined time period. Features considered by the profiling associated with an account include transaction type, payment method, or other means that identify how a transaction was conducted, or where it was conducted or parties involved. These profiles are used for management information (MI) purposes, for case investigation purposes and to support transaction monitor 134 and KYC component 132 decision making processes. Profile generator 142 can be configured to generate any combination of profiles based on data retained or available to the system. Profiles are retained in data store 160.

Profiles are created over different aggregation periods (e.g., daily, weekly or monthly). Profiling periods may be calendar based. Profiling periods may be based on rolling windows of time (e.g. a rolling 4 week period). Profiles may be dynamically created on request from other processes or be created at scheduled periods. Profiles may be stored across different periods (e.g. a profile representing a summary of data activity on a day may be created each day and stored for a period of 365 days).

Profiles may be created through aggregations of transaction, reference or other data sources.

Profiles may be created through re-aggregation of other profiles. Such re-aggregation may be used to create:

(a) profiles across different temporal periods, e.g., daily profiles are aggregated to create weekly profiles; and

(b) peer profiles associated with groups of business entities, e.g., all profiles for a particular type of customer account are re-aggregated to create a 'typical' profile that can be used to assess measures of difference from a 'peer' group.

## Case Manager 122

Case manager 122 provides functionality for the management and investigation of alerts and also for the management and investigation of cases, where cases comprise information taken from one or more alerts or information from other sources.

Workflow component 124 provides functionality to guide a user through specific investigation stages and to allow cases to be allocated and assigned to different individuals in order for those individuals to perform different functions. The system uses a workflow loader to allow alerts and cases to be loaded into workflow states based on defined rules that consider details of the alert or of the case. Transitions and state changes as cases move through the workflow are audited and recorded. As workflow transitions through states workflow actions may be triggered as a case enters or leaves a particular workflow state. Workflow actions can be configured to generate events that are considered by transaction monitor 134. Such events can be used to increase or reduce the scrutiny applied to a business entity (workflow feedback). A case in a particular workflow state may suppress other cases or alerts from appearing to users associated with other workflow states (workflow suppression). Workflow component 124 provides facilities for automatic escalation and routing or alerts based on pre-defined criteria, e.g., after a defined period an alert is escalated to a new workflow state. The system provides facilities for workflow configuration, to enable state routings and permissions. Workflow end states allow outcomes of investigations to be resolved (e.g. fraud, non-fraud).

Case manager 122 allows documents and other electronic materials to be attached with cases.

At the point of investigation the system can identify other business entities linked to the business entity of an alert or business entities associated with a case. Linkages are identified by matching fields from reference, or other data, associated with a business entity to details of other business entities held in the data store 160. Matches are presented to operators to consider as part of case or alert investigation. Fuzzy matching and normalization methods may be used as part of this matching process. Fields considered as part of the match are those such as customer name, address, SSN, telephone number. Linkage may also consider elements of transactions to identify other parties with which the business entity conducts transactions. Such linkage methods allow an operator to quickly and easily identify other individuals that share characteristics with the customer being investigated (e.g. being an individual residing at the same address or sharing a mobile phone number) or doing business with the business entity.

Security component 110, authorization 112, entitlement 114 and user Management 116, collectively, provide the following features:

(a) user and process authentication to the system;
(b) user entitlements management to control which elements of the system can be accessed by a user or system process;
(c) facilities to manage, add and remove users from the system: and
(d) facilities to interface with other security and entitlement systems.

Reporter 126 provides the following functions:

(a) management information reporting associated with other components and processes of the system;
(b) risk-based reporting, e.g., high risk country reporting;
(c) generation of report for regulatory purposes and the electronic submission of those reports to appropriate authorities; and
(d) generation of reports associated with system components including workflow and case management.

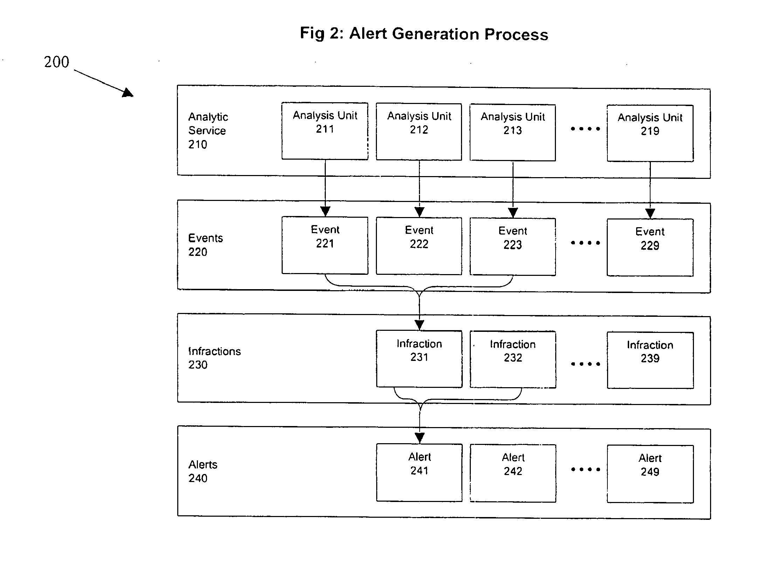

FIG. 2 is a block diagram of an alert generation process 200. Alert generation process 200 is organized in a multi-layered hierarchical architecture that includes an analytic service 210, events 220, infractions 230 and alerts 240.

Analytic service 210 includes analysis units 211-219. Events 220 includes one or more events 221-229. Infractions 230 includes one or more infractions 231-239. Alerts 240 includes one or more alerts 241-249.

Analysis units 211-219 are any configuration of processes associated with analytic services 130. Analysis units 211-219 watch for signs of particular types of activity that may be of interest. Based upon predetermined criteria, an analysis unit, e.g., analysis unit 211, generates an event, e.g., event 221. Based upon predetermined criteria, one or more of events 221-229 will constitute an infraction, e.g., infraction 231. In some instances, the generation of an infraction may trigger additional analytical processing to be performed, e.g., the generation of infraction 231 may trigger additional analytical processing and the generation of infraction 232. In other instances infraction 232 may have been independently generated by another analytical process. Based upon predetermined criteria, one or more of infractions 231-239 will constitute an alert, e.g., alert 241.

Customer risk monitor 100 can be employed for KYC definition of customer risk bands for ongoing monitoring. This feature is described in the following several paragraphs.

Following a KYC check on a customer, account or other business entity the risk score(s) or risk band(s) are stored in data store 160 for future reference by transaction monitor 134. During event, infraction and alert generation, transaction monitor 134 uses the risk score or banding to change the likelihood that an alert will be subsequently generated against the transaction activity of a business entity based on the measured risk identified at the point that the KYC check was performed. This KYC risk score is used to increase or reduce the likelihood that an alert is generated for a customer, account or other business entity. A high risk score will increase the likelihood that an alert is generated based on transaction activity. A low risk score will reduce the likelihood that an alert is generated for that same pattern of activity. The contribution of the KYC risk score to that of the overall alert is configurable and its contribution and effect can be controlled.

In one instantiation of customer risk monitor 100, the KYC risk scores are created as events and are then subsequently considered when monitoring transaction activity. In another, at the point that transaction monitor 134 detects activity for a particular customer or account, an event is generated that reflects the KYC risk for that customer. This event is then used as part of subsequent infraction and alert generation processes.

In another instantiation of customer risk monitor 100, the KYC risk scores are created as infractions and are then subsequently considered when monitoring transaction activity. Alternatively, at the point that transaction monitor 134 detects activity for a particular customer or account, an infraction is generated. This infraction is then used as part of subsequent alert generation processes.

Customer risk monitor 100 can be employed for automated post-alert or post-infraction KYC checks. This feature is described in the following several paragraphs.

The use of automated post-alert or post-infraction KYC checks guarantees that KYC checks are up-to-date for all customer, account or other business entities, and has the advantage that it allows KYC checks to be performed as part of the processing of transaction monitor 134 without a need to have performed these for all customers. For instance, KYC may be performed for all new customers, but not for existing customers. When transaction activity of sufficient interest to be suspicious or worthy of investigation results for a customer that has not had a KYC check performed, the system performs the KYC check automatically.

The system may check the date of a previous KYC check for a customer, account or business entity. If it was recent (within a defined period) then no additional check will be performed and the risk will taken from data store 160. If the check was not performed within a defined period, then a new check can be triggered. Such an approach guarantees that an up-to-date KYC risk score is always considered for alert generation and investigation.

In one instantiation of the system, an automated KYC check is performed for a business entity when an infraction is generated by transaction monitor 134 against that business entity. The risk score resulting from the KYC check is then used as part of the alert generation processes and to adjust the alert score for the alert. The KYC check processes can be re-run to assess a new risk score for a business entity or the score may be taken from data store 160.

Alternatively, at the point that an alert is generated, a KYC Check is automatically performed against the business entity. This allows a new report and risk score to be created and used as part of the case management and case investigation processes. In this regard, customer risk monitor 100 also provides an operator the option of initiating an interactive KYC check from an alert (or case) as it is being investigated. The KYC reports for the customer or account can then be used for case investigation in case manager 122. KYC reports may be attached to cases and data from the KYC reports used to enhance investigations.

Customer risk monitor 100 can be employed so that KYC checks are retained with customer reference data. The KYC Check report and results are stored in data store 160 and made available to other system components. KYC reports are retained and used as part of case investigations. The KYC reports may be searched in order to identify account linkages as part of the alert investigation processes.

Customer risk monitor 100 can be employed so that a KYC check defines the peer associations for a customer. The KYC check risk score or risk banding is used by profile generator 142 to associate the business entity scored by the check with a particular peer group. This peer group is subsequently used by transaction monitor 134 as part of event, infraction and alert generation processes. This allows peer groups for an account, customer or other business entity to be sub-divided in terms of the risk associated with characteristics of that business entity. A regular automated KYC check against customer details then allows customers to be re-allocated to different peer groups based on their degree of risk. Alerts may be generated according to the degree of change associated with peers. A significant peer change being indicative that the customer is worthy of investigation. System operators may change parameter settings to increase the likelihood of peers of high risk alerting.

Customer risk monitor 100 provides the following benefits:

(a) improved identification of transactional risk where the risk of customer transactions is considered in relation to and in combination with a non-transactional measurement of risk for that customer;
(b) improved efficiency of processing where KYC checks are only performed after activity of interest has previously been detected;
(c) improved alert quality associated with transaction monitor 134 through the combination of customer risk measurements; and
(d) improved facilities for case investigation based on features and associations of the customer being monitored.

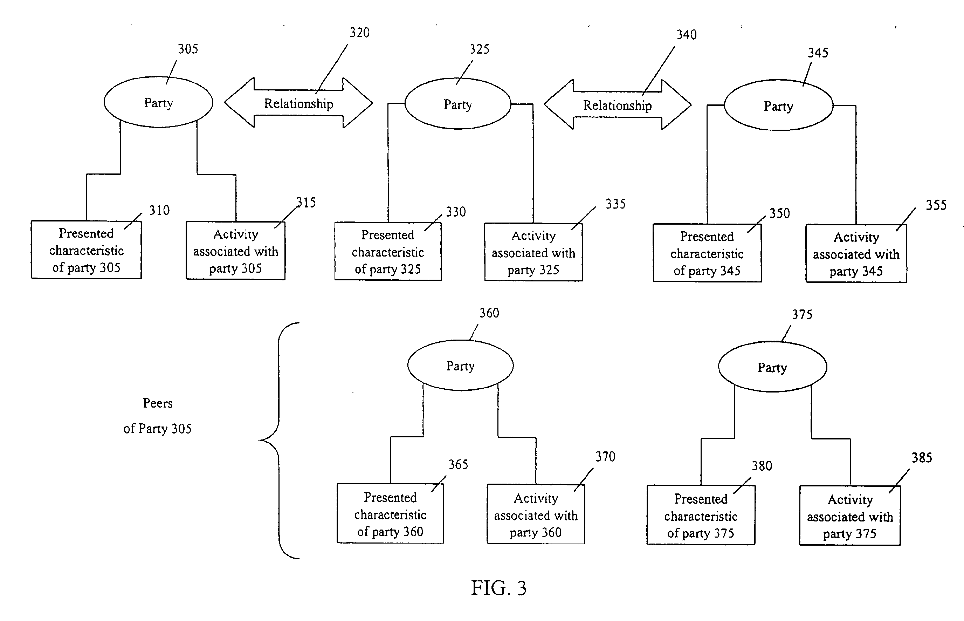

FIG. 3 is a diagram showing several parties and their attributes. FIG. 3 includes parties 305, 325, 345, 360 and 375. Party 305 is characterized by a presented characteristic 310 and an activity 315. Presented characteristic 310 could be, for example, a name of party 305, an address of party 305, an occupation of party 305, a geographic location of party 305, or a combination of such characteristics. Activity 315 is an activity associated with party 305 either initiated by party 305 or involving party 305. Activity 315 could be an activity conducted by party 305, for example, a payment by party 305, an account inquiry made by party 305, an address change of party 305, or a combination of such activities. Activity 315 can also be an activity involving party 305 but initiated by another party, such as a payment made to party 305, or any other transaction associated with party 305 made by a third party.

Party 325 is characterized by a presented characteristic 330 and an activity 335. Party 345 is characterized by a presented characteristic 350 and an activity 355. Party 360 is characterized by a presented characteristic 365 and an activity 370. Party 375 is characterized by a presented characteristic 380 and an activity 385.

Parties 305 and 325 have a relationship 320 with one another. Relationship 320 can be any sort of association, known or unknown, between party 305 and party 325. Note that in relationship 320, parties 305 and 325 need not necessarily be aware of one another. Relationship 320 is built through a comparison of presented characteristics associated with party 305 and those presented or pre-known of party 325, where these characteristics show a sufficient degree of association to induce that a relationship exists between parties 305 and 325. The presented characteristics for party 325 may be provided in a hotlist. For example, party 305 may be associated with party 325 because they are married, live at the same address, work in the same organization or share one or more other characteristics that indicate a relationship between them.

Parties 325 and 345 have a relationship 340 with one another. Relationship 340, like relationship 320, can be any form of relationship based on presented characteristics.

Parties 360 and 375 are peers of party 305. That is, party 305 is associated with one or both of parties 360 and 375. Party 360 might be, for example, a party carrying on a business similar to that of party 305, or might be a party having similar income or other similar economic indicia. Parties 305 and 360 do not necessarily have any relationship with one another. Since party 360 is a peer of party 305, behavior of party 360 may be indicative of, or foretelling of, behavior of party 305. Party 360 can therefore serve as a reference party for party 305. Party 375 is also a peer and can be used similarly. In general multiple peers will be considered and their behavior will be statistically aggregated as a peer profile. Therefore party 360 may even be a hypothetical party, e.g., derived from statistical behavior of a group of peers, rather than an actual party.

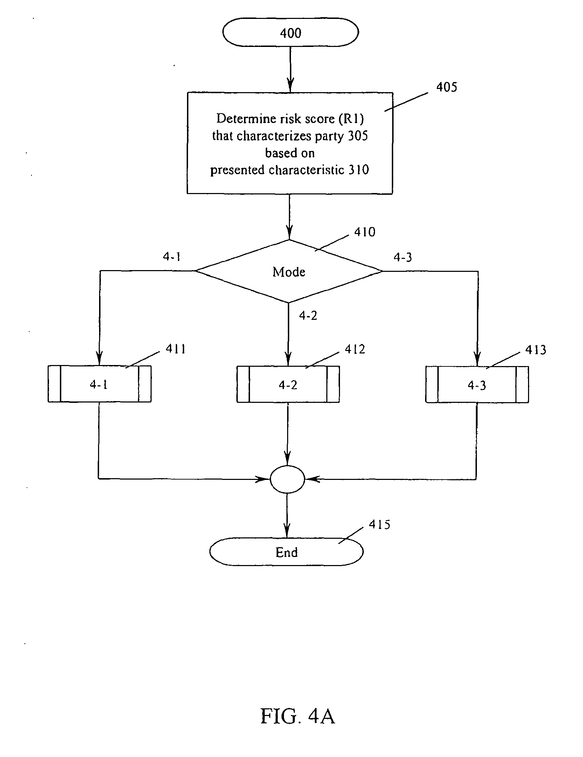

FIGS. 4A - 4D are, collectively, a flowchart of a method 400 for determining a risk score.

Method 400 begins at FIG. 4A, step 405.

In step 405, method 400 determines a risk score R1 that characterizes party 305 based on presented characteristic 310. R1 is derived from a combination of one or more of the IDV, CDD and EDD process steps.

IDV process step:

> The customer details of party 305 are presented to the system:
>
> > Name: Alan Smithee
> > Date of Birth: 1 April 1969
> > SSN: 123456789
> > Address: Cottonwood Springs, CA 12345
>
> The identity of the individual is verified, and since all details except the zip code are verified, the risk score for the IDV step is given as 0.1 for party 305. Where a set of rules are used to determine this score based on the degree of match between the presented details and those that are verified.

CDD process step:

> Party 305, 'Alan Smithee', associated with the presented characteristics above, is not found on any cold list and checks are made to identify whether party 305 appears in the CDD watchlists. 'Alan Smithee' is not found, and neither are the variants 'Al Smithee', 'Al Smythee' or 'Allen Smithee'. However, 'Alan Smythee', a similarly named individual, party 325, with a different address and SSN but born in the same year, is found to have an association through a company directorship to another individual, party 345, that does appear on a sanctions list. The CDD step therefore gives a risk score of 0.6 to party 305 through the application of rules considering the characteristic of the match and the degree of relationship, or possible association, to the other individual.

EDD process step:

> Using the presented characteristics of party 305, 'Alan Smithee', the EDD step finds three documents that demonstrate the good standing of 'Alan Smithee' and two positive and one negative reference to 'Alan Smythee'. No other references are found for any other name variants. The EDD process gives a risk score of 0.2 to party 305 based on rules considering the merits of the returned documents.

KYC risk score:

> An overall risk score R1 is then derived from an algorithmic, rules-based or other mathematical combination of the three previous steps. A weighted sum across these components, where the weights are used to control the contribution from the different steps, and may be used by a business to tune settings of the system, provides an overall risk score for party 305 of 0.35. Although not shown in FIG. 4A had the risk score exceeded a predetermined threshold an alert would automatically have been generated. Otherwise, and where this is not applied, then the risk score is passed to 410 for further processing.

R1 therefore considers (a) an association between party 305 and another party, e.g., party 325, based on features and variants of the presented characteristics; or (b) the further association or relationship between party 325 and another party 345 based on business, personnel or other relationships associated with the presented haracteristics; or (c) a context within which party 305, party 325 or party 345 is mentioned in a document, e.g., a web page from the Securities and Exchange Commission website; or (d) a combination thereof. From step 405, method 400 proceeds to step 410.

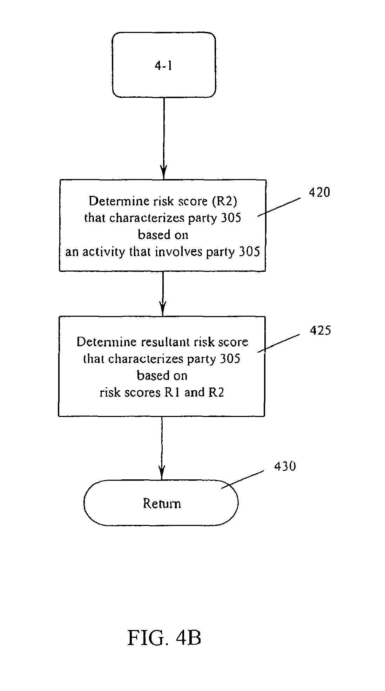

In step 410, a subprocess is selected. These subprocesses are described below in association with FIGS. 4B - 4D. For subprocess 4-1, method 400 advances to step 411. For subprocess 4-2, method 400 advances to step 412. For subprocess 4-3, method 400 advances to step 413. The selection of subprocess is dependent on the configuration of the invention. The subprocesses each demonstrate different modes of operation of the invention.

In step 411, method 400 performs subprocess 4-1, as detailed in FIG. 4B. After a return from subprocess 4-1, method 400 advances to step 415.

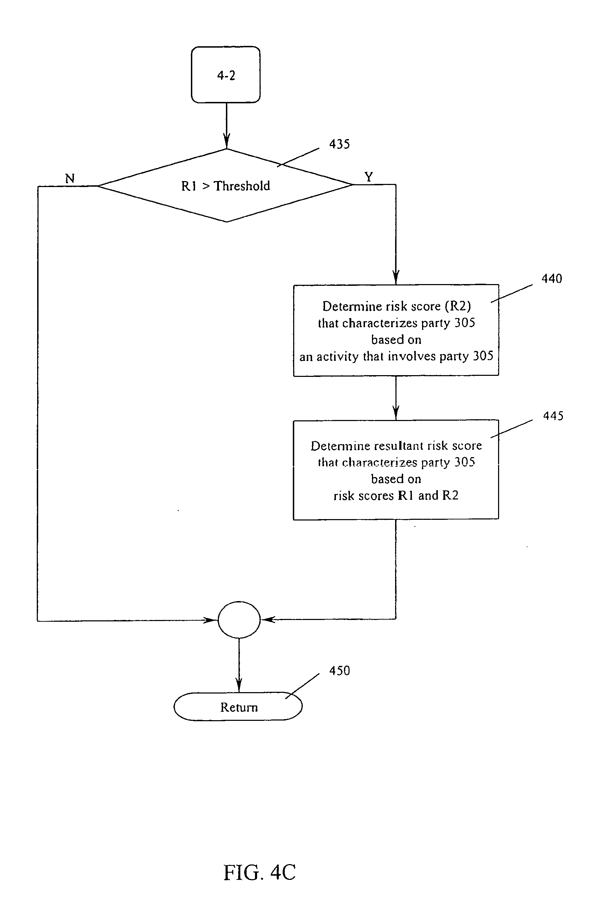

In step 412, method 400 performs subprocess 4-2, as detailed in FIG. 4C. After a return from subprocess 4-2, method 400 advances to step 415.

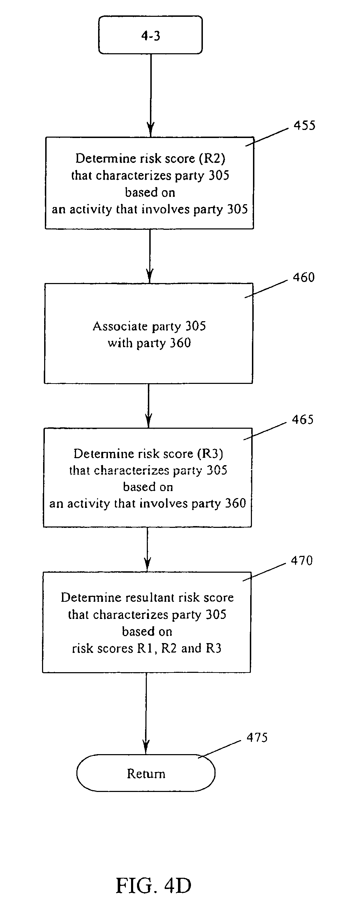

In step 413, method 400 performs subprocess 4-3, as detailed in FIG. 4D. After a return from subprocess 4-3, method 400 advances to step 415.

In step 415, method 400 ends.

FIG. 4B is a flowchart of subprocess 4-1. Subprocess 4-1 commences with step 420.

In step 420, subprocess 4-1 determines a risk score R2 that characterizes party 305 based on activity 315. As previously described, activity 315 involves party 305 and can either be conducted directly by party 305, such as party 305 requesting a loan, or can be conducted by another party such that it involves party 305, such as the financial institution that holds the account for party 305 granting a new line of credit to party 305 or where another party makes a payment that involves party 305. R2 can be indicative of a likelihood of a behavior such as a financial misdeed, a financial crime, money laundering, or a combination thereof.

For example, party 305, 'Alan Smithee', makes a transaction on an account of an unusual value in a location that is unusual and involving a third party with whom he has not previously transacted. A comparison of the characteristics of this transaction to the previous profile of behavior for party 305 means that the system generates a risk score for party 305 against the transaction activity of 0.6.

From step 420, subprocess 4-1 proceeds to step 425.

In step 425, subprocess 4-1 determines a resultant risk score that characterizes party 305 based on risk scores R1 and R2.

For example, a weighted sum, or other mathematical combination, is used to combine the R1 (0.35) and R2 (0.6) risk scores, where the weights provide the degree of contribution associated with each of the scores, in this example being 0.7 and 0.3 resepctively. The resultant overall risk score for party 305 is 0.425. e.g.:

$$Risk = W1 \times R1 + W2 \times R2$$

$$Risk = 0.7 \times 0.35 + 0.3 \times 0.6$$

Other mathematical expressions or algorithmic approaches to the combination of the risk scores may also be used.

From step 425, subprocess 4-1 proceeds to step 430.

In step 430, subprocess 4-1 returns to a point from which it was called (see FIG. 4A).

FIG. 4C is a flowchart of subprocess 4-2. Subprocess 4-2 commences with step 435.

In step 435, risk score R1 is evaluated with respect to a threshold value. The threshold is determined based on past experience with risk assessment. A party having a risk score that exceeds the threshold is deemed to be deserving of additional scrutiny. If risk score R1 is not greater than the threshold value, then subprocess 4-2 proceeds to step 450. If risk score R1 is greater than the threshold value, then subprocess 4-2 proceeds to step 440.

In step 440, subprocess 4-2 determines a risk score R2 that characterizes party 305 based on activity 315 that involves party 305. The process to determine the value of R2 in step 440 is the same as the process described for step 420, above. From step 440, subprocess 4-2 proceeds to step 445.

In step 445, subprocess 4-2 determines a resultant risk score that characterizes party 305 based on risk scores R1 and R2. The process to determine the resultant risk score based on R1 and R2 in step 445 is similar to the process described for step 425, above.

From step 445, subprocess 4-2 proceeds to step 450.

In step 450, subprocess 4-2 returns to a point from which it was called (see FIG. 4A).

FIG. 4D is a flowchart of subprocess 4-3. Subprocess 4-3 commences with step 455.

In step 455, subprocess 4-3 determines a risk score R2 that characterizes party 305 based on activity 315 that involves party 305. The process to determine the value of R2 in step 455 is the same as the process described for step 420, above. From step 455, subprocess 4-3 proceeds to step 460.

In step 460, subprocess 4-3 associates party 305 with a peer, e.g., party 360. For example, assume that presented characteristic 310 indicates that party 305 is in the trash disposal business, and that party 360 is also in the trash disposal business. Subprocess 4-3 can associate party 305 to party 360 based on the knowledge that both parties are in the same business. In practice, the association can be made to a group of peers (e.g., a group that includes parties 360, 375 and other peers (not shown)) rather than an individual peer. Other techniques of creating the association are also possible such as comparison or clustering of peers based on profiles of previous transaction characteristics for each party. From step 460, subprocess 4-3 proceeds to step 465.

In step 465, subprocess 4-3 determines a risk score R3 that characterizes party 305 based on an activity that involves party 360. For example, party 305 may be involved in particular types of transactional activity that are not typical for party 360, and are not typical for this peer grouping. A comparison of the transactional activity of party 305 and party 360 may be such that it casts suspicion on party 305. From step 465, subprocess 4-3 proceeds to step 470.

In step 470, subprocess 4-3 determines a resultant risk score that characterizes party 305 based on risk scores R1, R2, and R3. The resultant risk score is derived from an algorithmic or mathematical combination of the risk scores R1, R2 and R3, for instance a weighted sum, where the weights are used to control the relative contribution of the risk scores. This might result, for example, with a risk score of 0.55 for party 305. From step 470, subprocess 4-3 proceeds to step 475.

In step 475, subprocess 4-3 returns to a point from which it was called (see FIG. 4A).

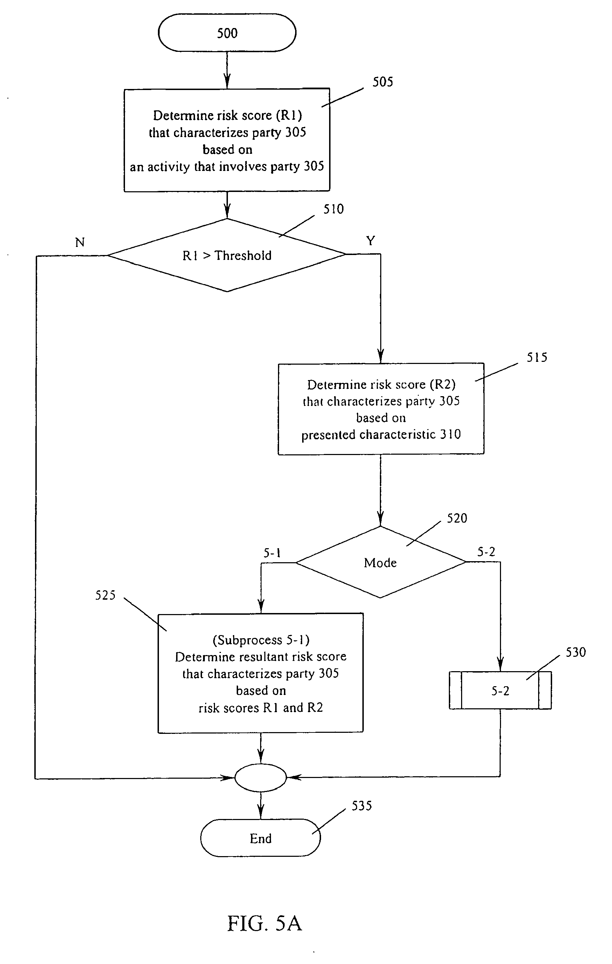

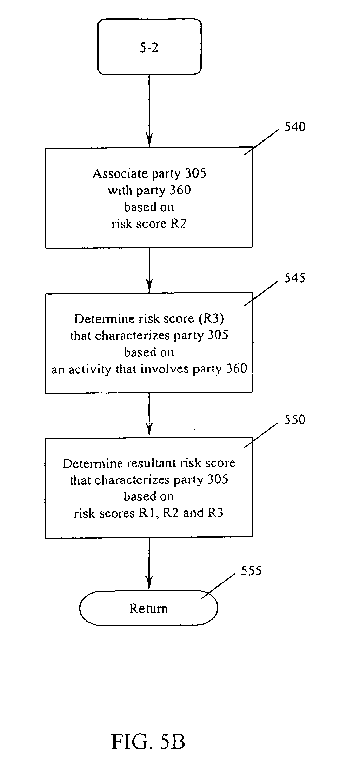

FIGS. 5A and 5B are, collectively, a flowchart of a method 500 for determining a risk score. Method 500 begins at step 505.

In step 505, method 500 determines a risk score R1 that characterizes party 305 based on activity 315 that involves party 305. The process to determine the value of R1 in step 505 is the same as the process described for step 420, above. From step 505, method 500 proceeds to step 510.

In step 510, risk score R1 is evaluated with respect to a threshold value. The threshold is determined based on past experience with risk assessment or through system test facilities that allow the threshold value to be set. A party having a risk score that exceeds the threshold is deemed to be deserving of additional scrutiny. If risk score R1 is not greater than the threshold value, then method 500 proceeds to step 535. If risk score R1 is greater than the threshold value, then method 500 proceeds to step 515.

In step 515, method 500 determines a risk score R2 that characterizes party 305 based on presented characteristic 310. If the risk score has previously and recently been calculated and is available from data store 160, then there is no need to recalculate the value, and the pre-existing value can be used. Otherwise the process to determine risk score R2 in step 515 is the same as the process described for step 405, above. From step 515, method 500 proceeds to step 520.

In step 520, a subprocess is selected. For subprocess 5-1, method 500 advances to step 525. For subprocess 5-2, method 500 advances to step 530. Selection is dependent on the mode of operation of the invention and the configuration applied.

In step 525, method 500 performs subprocess 5-1, and more particularly, determines a resultant risk score that characterizes party 305 based on risk scores R1 and R2. The process to determine the resultant risk score based on R1 and R2 in step 525 is similar to the process described for step 425, above. From step 525, method 500 proceeds to step 535.

In step 530, method 500 performs subprocess 5-2, which is shown in FIG. 5B. After a return from subprocess 5-2, method 500 proceeds to step 535.

In step 535, method 500 ends.

FIG. 5B is a flowchart of a subprocess 5-2. Subprocess 5-2 commences with step 540.

In step 540, subprocess 5-2 associates party 305 with party 360 based on risk score R2. This association is based on bandings of risk score R2 such that parties are associated that have similar scores calculated for them. Risk score R2 can consider a wide range of presented characteristics and the association can be based on a risk score calculated from any combination of the presented characteristics, for example, address and date of birth. The association may be based entirely on the parties having a similar risk score, or additionally be based on the combination of the risk score and some other presented characteristic that they have in common. For example the association between party 305 and party 360 may be based on a common risk score band and that the parties also share other peer characteristics, e.g., a common product or account type. This process allows, for instance, high, medium and low risk peer groups to be created based on the risk score where the peer groups also consider presented characteristics such as business type. In this way, for instance, high risk money service bureaus or low risk platinum accounts will be associated with similarly disposed peers for analysis purposes. From step 540, subprocess 5-2 proceeds to step 545.

In step 545, subprocess 5-2 determines a risk score R3 that characterizes party 305 based on an activity that involves party 360. For example, party 305 may be involved in particular types of transactional activity that are not typical for party 360 and are not typical for this peer grouping. A comparison of the transactional activity 315 of party 305 and the transactional activity 370 of party 360 may be such that it casts suspicion on party 305. Conversely should party 360 have been involved in nefarious activity, such activity may cast suspicion on party 305, and therefore party 305 will be considered with increased risk should activity 315 of party 305 be similar to that of activity 370 of party 360. For example, party 360 may have been found to be laundering money in a particular manner. Since parties 305 and 360 are in the same business, such behavior on the part of party 360 may cast suspicion on similar activity by party 305, although party 305 and party 360 have no relationship to one another. From step 545, subprocess 5-2 proceeds to step 550.

In step 550, subprocess 5-2 determines a resultant risk score that characterizes party 305 based on risk scores R1, R2, and R3. The resultant risk score is derived from an algorithmic or mathematical combination of the risk scores R1, R2 and R3, for instance a weighted sum, where the weights are used to control the relative contribution of the risk scores. This might result, for example, with a score of 0.47. From step 550, subprocess 5-2 proceeds to step 555.

In step 555, subprocess 5-2 returns to a point from which it was called (see FIG. 5A).

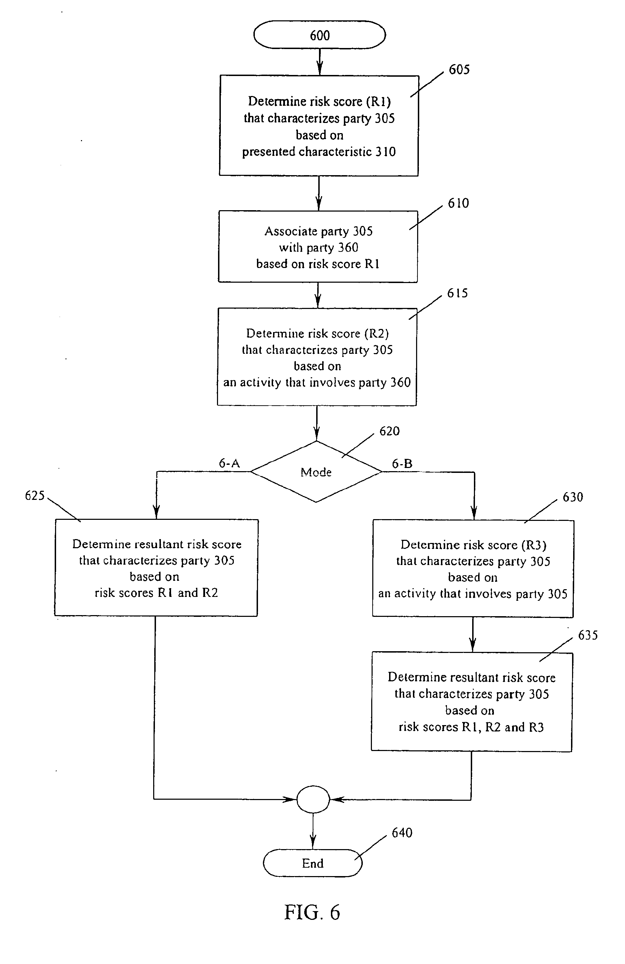

FIG. 6 is a flowchart of a method 600 for determining a risk score. Method 600 begins at step 605.

In step 605, method 600 determines a risk score R1 that characterizes party 305 based on presented characteristic 310. The process to determine the value of R1 in step 605 is similar to the process described for step 405, above. From step 605, method 600 proceeds to step 610.

In step 610, method 600 associates party 305 with party 360 based on risk score R1. This association is based on bandings of risk score R1 such that parties are associated that have similar scores calculated for them. The process of association is the same as that described for step 540. Method 600 next proceeds to step 615.

In step 615, method 600 determines a risk score R2 that characterizes party 305 based on an activity that involves party 360. The process for calculating this risk score is the same as that described for step 545. From step 615, method 600 proceeds to step 620.

From step 620, method 600 selects to proceed with either of mode 6-A or mode 6-B. To proceed with mode 6-A, method 600 advances to step 625. To proceed with mode 6-B, method 600 advances to step 630.

In step 625, method 600 determines a resultant risk score that characterizes party 305 based on risk scores R1 and R2. The process to determine the resultant risk score based on R1 and R2 in step 625 is the same as the process described for step 425, above. From step 625, method 600 proceeds to step 640.

In step 630, method 600 determines a risk score R3 that characterizes party 305 based on an activity that involves party 305. The activity involves party 305, but can either be conducted by party 305, e.g., activity 315 (such as party 305 requesting a loan), or can be conducted by another party, e.g., activity 335 (such as party 325 granting a new line of credit to party 305). The process to determine risk score R3 in step 630 is similar to that for step 420, above. From step 630, method 600 proceeds to step 635.

In step 635, method 600 determines a resultant risk score that characterizes party 305 based on risk scores R1, R2, and R3. The resultant risk score is derived from an algorithmic or mathematical combination of the risk scores R1, R2 and R3, for instance a weighted sum, where the weights are used to control the relative contribution of the risk scores. This might result, for example, with a risk score of 0.55. From step 635, method 600 proceeds to step 640.

In step 640, method 600 ends.

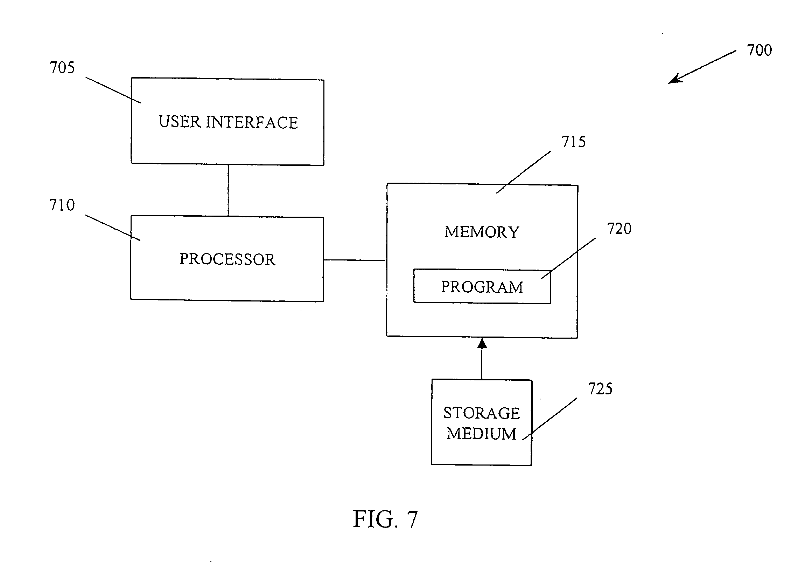

FIG. 7 is a block diagram of a system 700 for executing the methods described herein, and thus serves as an exemplary embodiment of customer risk monitor 100. System 700 includes a user interface 705, a processor 710, and a memory 715. System 700 may be implemented on a general purpose microcomputer. Although system 700 is represented herein as a standalone system, it is not limited to such, but instead can be coupled to other computer systems (not shown) via a network (not shown).

Memory 715 is a memory for storing data and instructions for controlling the operation of processor 710. An implementation of memory 715 would include a random access memory (RAM), a hard drive and a read only memory (ROM). One of the components of memory 715 is a program 720.

Program 720 includes instructions for controlling processor 710 to execute the processes described above in association with FIGS. 1 - 6. Program 720 may be implemented as a single module or as a plurality of modules that operate in cooperation with one another. The term "module" is used herein to denote a functional operation that may be embodied either as a stand-alone component or as an integrated configuration of a plurality of subordinate components.

User interface 705 includes an input device, such as a keyboard or speech recognition subsystem, for enabling a user to communicate information and command selections to processor 710. User interface 705 also includes an output device such as a display or a printer. A cursor control such as a mouse, track-ball, or joy stick, allows the user to manipulate a cursor on the display for communicating additional information and command selections to processor 710. For example, via user interface 705, system 700 receives user requests 180 (see FIG. 1), and presents reports that include the various risk scores described herein.

While program 720 is indicated as already loaded into memory 715, it may be configured on a storage medium 735 for subsequent loading into memory 715. Storage medium 735 can be any conventional storage medium such as a magnetic tape, an optical storage medium, a compact disk, or a floppy disk. Alternatively, storage medium 735 can be a random access memory, or other type of electronic storage, located on a remote storage system.

Steps associated with the processes described herein can be performed in any order, unless otherwise specified or dictated by the steps themselves.

ADDITIONAL EMBODIMENTS

**Aspect 1.** A method comprising:

determining a first risk score that characterizes a party, based on an activity that involves said party; and
determining a second risk score that characterizes said party, based on a presented characteristic of said party, if said first risk score exceeds a threshold.

**Aspect 2.** The method of aspect 1, further comprising:

determining a resultant risk score that characterizes said party, based on said first and second risk scores.

**Aspect 3.** The method of aspect 2, wherein said party is a first party, and wherein said method further comprises: associating said first party with a second party, based on said second risk score; and determining a third risk score that characterizes said first party, based on an activity that involves said second party, wherein said resultant risk score is also based on said third risk score.

**Aspect 4.** The method of aspect 1, wherein said activity is selected from the group consisting of payment activity of said party, an account inquiry made by said party, an address change of said party, and a combination thereof.

**Aspect 5.** The method of aspect 1, wherein said party is a first party, and wherein said activity is conducted by a second party.

**Aspect 6.** The method of aspect 1, wherein said first risk score is indicative of a likelihood of a behavior selected from the group consisting of a financial misdeed, a financial crime, money laundering, and a combination thereof.

**Aspect 7**. The method of aspect 1, wherein said presented characteristic is selected from the group consisting of a name of said party, an address of said party, an occupation of said party, a geographic location of said party, and a combination thereof.

**Aspect 8.** The method of aspect 1, wherein said determining said second risk score includes considering an item selected from the group consisting of an association between said party and another party, a context within which said party is mentioned in a document, and a combination thereof.

**Aspect 9.** A system comprising:

> a module that determines a first risk score that characterizes a party, based on an activity that involves said party; and
> a module that determines a second risk score that characterizes said party, based on a presented characteristic of said party, if said first risk score exceeds a threshold.

**Aspect 10.** The system of aspect 9, further comprising:

> a module that determines a resultant risk score that characterizes said party, based on said first and second risk scores.

**Aspect 11.** The system of aspect 10, wherein said party is a first party, and wherein said system further comprises: a module that associates said first party with a second party, based on said second risk score; and a module that determines a third risk score that characterizes said first party, based on an activity that involves said second party, wherein said resultant risk score is also based on said third risk score.

**Aspect 12.** The system of aspect 9, wherein said activity is selected from the group consisting of payment activity of said party, an account inquiry made by said party, an address change of said party, and a combination thereof.

**Aspect 13.** The system of aspect 9, wherein said party is a first party, and wherein said activity is conducted by a second party.

**Aspect 14.** The system of aspect 9, wherein said first risk score is indicative of a likelihood of a behavior selected from the group consisting of a financial misdeed, a financial crime, money laundering, and a combination thereof.

**Aspect 15.** The system of aspect 9, wherein said presented characteristic is selected from the group consisting of a name of said party, an address of said party, an occupation of said party, a geographic location of said party, and a combination thereof.

**Aspect 16**. The system of aspect 9, wherein said a module that determines said second risk score considers an item selected from the group consisting of an association between said party and another party, a context within which said party is mentioned in a document, and a combination thereof.

**Aspect 17**. A storage medium comprising a program encoded thereon that is executable in a processor to perform a method that includes:

> determining a first risk score that characterizes a party, based on an activity that involves said party; and
> determining a second risk score that characterizes said party, based on a presented characteristic of said party, if said first risk score exceeds a threshold.

**Aspect 18**. The storage medium of aspect 17, further comprising:

> determining a resultant risk score that characterizes said party, based on said first and second risk scores.

> **Aspect 19.** The storage medium of aspect 18, wherein said party is a first party, and wherein said method further includes: associating said first party with a second party, based on said second risk score; and determining a third risk score that characterizes said first party, based on an activity that involves said second party, wherein said resultant risk score is also based on said third risk score.

**Aspect 20.** The storage medium of aspect 17, wherein said activity is selected from the group consisting of payment activity of said party, an account inquiry made by said party, an address change of said party, and a combination thereof.

**Aspect 21.** The storage medium of aspect 17, wherein said party is a first party, and wherein said activity is conducted by a second party.

**Aspect 22.** The storage medium of aspect 17, wherein said first risk score is indicative of a likelihood of a behavior selected from the group consisting of a financial misdeed, a financial crime, money laundering, and a combination thereof.

**Aspect 23.** The storage medium of aspect 17, wherein said presented characteristic is selected from the group consisting of a name of said party, an address of said party, an occupation of said party, a geographic location of said party, and a combination thereof.

**Aspect 24.** The storage medium of aspect 17, wherein said determining said second risk score includes considering an item selected from the group consisting of an association between said party and another party, a context within which said party is mentioned in a document, and a combination thereof.

**Aspect 25.** A method comprising:

determining a first risk score that characterizes a first party, based on a presented characteristic of said first party;
associating said first party with a second party, based on said first risk score;
determining a second risk score that characterizes said first party, based on an activity that involves said second party; and
determining a resultant risk score that characterizes said first party, based on said first and second risk scores.

**Aspect 26**. The method of aspect 25, further comprising:

determining a third risk score that characterizes said first party, based on an activity that involves said first party,

wherein said resultant risk score is also based on said third risk score.

**Aspect 27.** The method of aspect 25, wherein said presented characteristic is selected from the group consisting of a name of said first party, an address of said first party, an occupation of said first party, a geographic location of said first party, and a combination thereof.

**Aspect 28.** The method of aspect 25, wherein said activity is selected from the group consisting of payment activity of said second party, an account inquiry made by said second party, an address change of said party, and a combination thereof.

**Aspect 29.** The method of aspect 25, wherein said activity is conducted by a third party.

**Aspect 30.** The method of aspect 25, wherein said second risk score is indicative of a likelihood of a behavior selected from the group consisting of a financial misdeed, a financial crime, money laundering, and a combination thereof.

**Aspect 31.** A system comprising:

a module that determines a first risk score that characterizes a first party, based on a presented characteristic of said first party;
a module that associates said first party with a second party, based on said first risk score;
a module that determines a second risk score that characterizes said first party, based on an activity that involves said second party; and
a module that determines a resultant risk score that characterizes said first party, based on said first and second risk scores.

**Aspect 32.** The system of aspect 31, further comprising:

a module that determines a third risk score that characterizes said first party, based on an activity that involves said first party,

wherein said resultant risk score is also based on said third risk score.

**Aspect 33.** The system of aspect 31, wherein said presented characteristic is selected from the group consisting of a name of said first party, an address of said first party, an occupation of said first party, a geographic location of said first party, and a combination thereof.

**Aspect 34.** The system of aspect 31, wherein said activity is selected from the group consisting of payment activity of said second party, an account inquiry made by said second party, an address change of said party, and a combination thereof.

**Aspect 35**. The system of aspect 31, wherein said activity is conducted by a third party.

**Aspect 36**. The system of aspect 31, wherein said second risk score is indicative of a likelihood of a behavior selected from the group consisting of a financial misdeed, a financial crime, money laundering, and a combination thereof.

**Aspect 37.** A storage medium comprising a program encoded thereon that is executable in a processor to perform a method that includes:

determining a first risk score that characterizes a first party, based on a presented characteristic of said first party;

associating said first party with a second party, based on said first risk score;

determining a second risk score that characterizes said first party, based on an activity that involves said second party; and

determining a resultant risk score that characterizes said first party, based on said first and second risk scores.

**Aspect 38**. The storage medium of aspect 37, further comprising:

determining a third risk score that characterizes said first party, based on an activity that involves said first party,

wherein said resultant risk score is also based on said third risk score.

**Aspect 39.** The storage medium of aspect 37, wherein said presented characteristic is selected from the group consisting of a name of said first party, an address of said first party, an occupation of said first party, a geographic location of said first party, and a combination thereof.

**Aspect 40.** The storage medium of aspect 37, wherein said activity is selected from the group consisting of payment activity of said second party, an account inquiry made by said second party, an address change of said party, and a combination thereof.

**Aspect 41**. The storage medium of aspect 37, wherein said activity is conducted by a third party.

**Aspect 42.** The storage medium of aspect 37, wherein said second risk score is indicative of a likelihood of a behavior selected from the group consisting of a financial misdeed, a financial crime, money laundering, and a combination thereof.

The techniques described herein are exemplary, and should not be construed as implying any particular limitation on the present invention. It should be understood that various alternatives, combinations and modifications could be devised by those skilled in the art. The present invention is intended to embrace all such alternatives, modifications and variances that fall within the scope of the appended claims.

**Claims**

**1.** A method comprising:

determining a first risk score that characterizes a party, based on a presented characteristic of said party;

determining a second risk score that characterizes said party, based on an activity that involves said party; and

determining a resultant risk score that characterizes said party, based on said first and second risk scores.

**2.** The method of claim 1, wherein said determining said first risk score includes considering an item selected from the group consisting of an association between said party and another party, and a context within which said party is mentioned in a document, and a combination thereof.

**3.** The method of claim 1,
wherein said party is a first party, and
wherein said activity is conducted by a second party.

**4.** The method of claim 1, wherein said determining said second risk score is invoked if said first risk score exceeds a threshold.

**5.** The method of claim 1, wherein said determining said first risk score is invoked if said second risk score exceeds a threshold.

**6.** The method of claim 1,
wherein said party is a first party, and
wherein said method further comprises:

associating said first party with a second party, based on said first risk score; and

determining a third risk score that characterizes said first party, based on an activity that involves said second party,

wherein said resultant risk score is also based on said third risk score.

**7.** A system comprising:

a module that determines a first risk score that characterizes a party, based on a presented characteristic of said party;

a.module that determines a second risk score that characterizes said party, based on an activity that involves said party; and

a module that determines a resultant risk score that characterizes said party, based on said first and second risk scores.

**8.** The system of claim 7, wherein said module that determines said first risk score considers an item selected from the group consisting of an association between said party and another party, and a context within which said party is mentioned in a document, and a combination thereof.

**9.** The system of claim 7,
wherein said party is a first party, and
wherein said activity is conducted by a second party.

**10.** The system of claim 7, wherein said a module that determines said second risk score is invoked if said first risk score exceeds a threshold.

**11.** The system of claim 7, wherein said a module that determines said first risk score is invoked if said second risk score exceeds a threshold.

**12.** The system of claim 7,
wherein said party is a first party, and
wherein said system further comprises:

a module that associates said first party with a second party, based on said first risk score; and
a module that determines a third risk score that characterizes said first party, based on an activity that involves said second party,
wherein said resultant risk score is also based on said third risk score.

**13.** A method comprising:

determining a first risk score that characterizes a party, based on an activity that involves said party; and
determining a second risk score that characterizes said party, based on a presented characteristic of said party, if said first risk score exceeds a threshold.

**14.** A method comprising:

determining a first risk score that characterizes a first party, based on a presented characteristic of said first party;
associating said first party with a second party, based on said first risk score; determining a second risk score that characterizes said first party, based on an activity that involves said second party; and
determining a resultant risk score that characterizes said first party, based on said first and second risk scores.

**15.** A system comprising:

a module that determines a first risk score that characterizes a party, based on an activity that involves said party; and
a module that determines a second risk score that characterizes said party, based on a presented characteristic of said party, if said first risk score exceeds a threshold.

**16.** A system comprising:

a module that determines a first risk score that characterizes a first party, based on a presented characteristic of said first party;
a module that associates said first party with a second party, based on said first risk score;
a module that determines a second risk score that characterizes said first party, based on an activity that involves said second party; and
a module that determines a resultant risk score that characterizes said first party, based on said first and second risk scores.

**17.** A storage medium comprising a program encoded thereon that is executable in a processor to perform a method according to any one of claims 1 to 7, 13 or 14.

# Fig 1: Customer Risk Monitor

# Fig 2: Alert Generation Process

200

| Analytic Service 210 | Analysis Unit 211 | Analysis Unit 212 | Analysis Unit 213 | • • • • | Analysis Unit 219 |

| Events 220 | Event 221 | Event 222 | Event 223 | • • • • | Event 229 |

| Infractions 230 | Infraction 231 | Infraction 232 | • • • • | Infraction 239 |

| Alerts 240 | Alert 241 | Alert 242 | • • • • | Alert 249 |

EP 2 138 973 A1

```
305              320            325           340          345
Party         Relationship      Party      Relationship    Party

  310      315          330       335          350       355
Presented  Activity    Presented Activity    Presented  Activity
characteristic associated characteristic associated characteristic associated
of party 305 with      of party 325 with    of party 345 with
           party 305             party 325             party 345
```

Peers
of Party 305

```
                 360                          375
                Party                        Party

          365       370              380       385
       Presented  Activity        Presented  Activity
       characteristic associated  characteristic associated
       of party 360 with          of party 375 with
                party 360                  party 375
```

FIG. 3

400

405

Determine risk score (R1)
that characterizes party 305
based on
presented characteristic 310

4-1

410

Mode

4-3

4-2

411

4-1

412

4-2

413

4-3

415

End

FIG. 4A

```
      ┌──────────┐
      │   4-1    │
      └────┬─────┘
           │
           ▼
  ┌────────────────────────────┐
  │  Determine risk score (R2) │  ── 420
  │  that characterizes party 305 │
  │          based on          │
  │ an activity that involves party 305 │
  └──────────────┬─────────────┘
                 │
                 ▼
  ┌────────────────────────────┐
  │ Determine resultant risk score │ ── 425
  │  that characterizes party 305 │
  │          based on          │
  │     risk scores R1 and R2  │
  └──────────────┬─────────────┘
                 │
                 ▼          ── 430
            ╭──────────╮
            │  Return  │
            ╰──────────╯
```

# FIG. 4B

4-2

435

R1 > Threshold

N          Y

Determine risk score (R2)
that characterizes party 305
based on
an activity that involves party 305

440

Determine resultant risk score
that characterizes party 305
based on
risk scores R1 and R2

445

450

Return

FIG. 4C

```
        ┌─────────┐
        │   4-3   │
        └─────────┘
             │
             ▼
   ┌──────────────────────────┐        455
   │  Determine risk score (R2)│
   │  that characterizes party 305│
   │        based on           │
   │ an activity that involves party 305│
   └──────────────────────────┘
             │
             ▼
   ┌──────────────────────────┐        460
   │                           │
   │    Associate party 305    │
   │      with party 360       │
   │                           │
   └──────────────────────────┘
             │
             ▼
   ┌──────────────────────────┐        465
   │  Determine risk score (R3)│
   │ that characterizes party 305│
   │        based on           │
   │ an activity that involves party 360│
   └──────────────────────────┘
             │
             ▼
   ┌──────────────────────────┐        470
   │ Determine resultant risk score│
   │  that characterizes party 305│
   │        based on           │
   │  risk scores R1, R2 and R3 │
   └──────────────────────────┘
             │
             ▼
        ╭─────────╮                    475
        │  Return │
        ╰─────────╯
```

FIG. 4D

```
                          ┌─────────┐
                          │   500   │
                          └─────────┘
                               │
                               ▼
                                              505
              ┌──────────────────────────────────┐
              │   Determine risk score (R1)       │
              │   that characterizes party 305    │
              │   based on                        │
              │   an activity that involves party 305 │
              └──────────────────────────────────┘
                               │
                               ▼
                                        510
         N         ◇─────────────────────◇        Y
    ┌─────────────    R1 > Threshold    ─────────────┐
    │              ◇─────────────────────◇           │
    │                                                │
    │                                                ▼
    │                                                      515
    │                      ┌──────────────────────────────┐
    │                      │   Determine risk score (R2)   │
    │                      │   that characterizes party 305│
    │                      │   based on                    │
    │                      │   presented characteristic 310│
    │                      └──────────────────────────────┘
    │                                     │
    │                                     ▼
    │                                              520
    │                  5-1    ◇───────────────◇   5-2
    │             ┌──────────    Mode    ──────────┐
    │             │          ◇───────────────◇     │
    │             ▼                                │
    │    525                                       │
    │   ┌──────────────────────────┐               ▼
    │   │   (Subprocess 5-1)        │         530
    │   │ Determine resultant risk score       ┌─────────┐
    │   │ that characterizes party 305          │   5-2   │
    │   │ based on                              └─────────┘
    │   │ risk scores R1 and R2     │               │
    │   └──────────────────────────┘               │
    │                 │                             │
    │                 ▼                             │
    └──────────────►( )◄───────────────────────────┘
                     │
                     ▼
                 ┌───────┐   535
                 │  End  │
                 └───────┘
```

FIG. 5A

```
                    ┌──────────────┐
                    │              │
                    │     5-2      │
                    │              │
                    └──────┬───────┘
                           │
                           │                    540
                           ▼             ╱
        ┌──────────────────────────────┐
        │      Associate party 305      │
        │        with party 360         │
        │          based on             │
        │         risk score R2         │
        └───────────────┬───────────────┘
                        │
                        │                    545
                        ▼             ╱
        ┌──────────────────────────────┐
        │    Determine risk score (R3)  │
        │   that characterizes party 305│
        │          based on             │
        │ an activity that involves party 360 │
        └───────────────┬───────────────┘
                        │
                        │                    550
                        ▼             ╱
        ┌──────────────────────────────┐
        │  Determine resultant risk score │
        │  that characterizes party 305 │
        │          based on             │
        │    risk scores R1, R2 and R3  │
        └───────────────┬───────────────┘
                        │
                        │                    555
                        ▼             ╱
                  ╭──────────────╮
                  │    Return     │
                  ╰──────────────╯
```

# FIG. 5B

```
                    ( 600 )

                       │
                       ▼
        ┌─────────────────────────────┐    ── 605
        │   Determine risk score (R1)  │
        │  that characterizes party 305│
        │           based on           │
        │  presented characteristic 310│
        └─────────────────────────────┘
                       │
                       ▼
        ┌─────────────────────────────┐    ── 610
        │      Associate party 305     │
        │        with party 360        │
        │     based on risk score R1   │
        └─────────────────────────────┘
                       │
                       ▼
        ┌─────────────────────────────┐    ── 615
        │   Determine risk score (R2)  │
        │  that characterizes party 305│
        │           based on           │
        │ an activity that involves party 360│
        └─────────────────────────────┘
                       │
                       ▼
              ╱◇╲   620
       6-A  ╱ Mode ╲  6-B
     ◄─────╲       ╱─────►
            ╲◇╱
```

       625                                         630

        ┌─────────────────────────────┐    ┌─────────────────────────────┐
        │  Determine resultant risk score│  │   Determine risk score (R3)  │
        │  that characterizes party 305│    │  that characterizes party 305│
        │           based on           │    │           based on           │
        │      risk scores R1 and R2   │    │ an activity that involves party 305│
        └─────────────────────────────┘    └─────────────────────────────┘
                                                           │
                                                           ▼    ── 635
                                            ┌─────────────────────────────┐
                                            │  Determine resultant risk score│
                                            │  that characterizes party 305│
                                            │           based on           │
                                            │    risk scores R1, R2 and R3 │
                                            └─────────────────────────────┘

```
                       ( ○ )

                         │
                         ▼        ── 640
                      ( End )
```

## FIG. 6

FIG. 7

Europäisches
Patentamt

European
Patent Office

Office européen
des brevets

**EUROPEAN SEARCH REPORT**

Application Number

EP 09 25 0873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application (Art. 92 EPC) are considered part of common general knowledge. Due to their notoriety no documentary evidence is found to be required. For further details see the accompanying Opinion and the reference below. XP002456252 * the whole document * ----- | 1-17 | INV. G06Q40/00 |

TECHNICAL FIELDS
SEARCHED (IPC)

G06Q

The present search report has been drawn up for all claims

| Place of search | Date of completion of the search | Examiner |
|---|---|---|
| Munich | 19 May 2009 | Anastasov, Yuliyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)